# EUROPEAN PATENT SPECIFICATION

(11) **EP 0 983 160 B1**
(45) Date of publication and mention of the grant of the patent: **17.07.2002**
(21) Application number: 98921969.6
(22) Date of filing: 05.05.1998
(51) Int. Cl.: B60K 41/06

(54) **METHOD FOR CONTROL OF ENGINE TORQUE DURING GEAR CHANGING**
VERFAHREN ZUR STEUERUNG DES MOTORDREHMOMENTS WÄHREND EINES SCHALTVORGANGES
PROCEDE DE COMMANDE DU COUPLE MOTEUR PENDANT LE CHANGEMENT DE VITESSE

(30) Priority: 06.05.1997 SE 9701737
(43) Date of publication of application: 08.03.2000
(73) Proprietor: Scania CV Aktiebolag (publ), 151 87 Södertälje (SE)
(72) Inventor: PETTERSSON, Magnus, SE-151 55 Södertalje (SE); NIELSEN, Lars, S-587 31 Linköping (SE)
(74) Representative: Waldebäck, Hans Olov
(86) International application number: SE9800819
(87) International publication number: WO9850247

(56) References cited:
- SE-C- 502 807
- SE-C- 504 717

## Description

### Technical area

The invention relates to a method for control of engine torque during automatic gear changing in a mechanical stepped gearbox, in accordance with the preamble to patent claim 1.

### State of the art

Automatic gear changing in mechanical stepped gearboxes requires the torque delivered from the engine to be adjusted in order to reduce the torque transmitted at the point of contact of the relevant gears. At the time of gear disengagement it is desirable for there to be a torque-free state at the contact point between the gears in the gearbox, but since it is not practically possible to measure the torque at the gear contact point the torque adjustment has to be achieved indirectly by adjusting the torque delivered from the engine.

SE,C,9401653-2 refers to a solution whereby gear changing takes place without the disc clutch being released. In this case a gear change is preceded by the engine torque being adjusted towards a zero-torque level. At this stage the torque with which the engine is modulated is calculated on the basis of available data concerning the engine, its moment of inertia, its internal friction and the like. The modulated torque may also depend on whether any power take-off is operating or not.

A disadvantage of this method is that there is no direct measurement of the torque and that the modulation is based on the expected behaviour of the engine. It is therefore not known whether the modulated torque is correct or not. The manufacture of engines and the various driveline components may involve tolerance differences which result in each individual vehicle having different characteristics. Even if the behaviour of an engine can be predicted correctly when it is new, its characteristics will change over time and with engine wear. This means that the engine torque modulated over time is probably not the same as when the engine was new. This in its turn means that gear changing may become difficult and/or that it is unacceptably delayed in certain circumstances. Oscillations in the control system may result in a very long scaling-in time being required for being able to determine correctly the fuel quantity which gives constant synchronous speed.

SE,C,9600454-4 refers to a solution which aims at improving that described above. To this end, a measurement is carried out at each gear change to ascertain whether the modulated zero-torque was correct. If it was not, the incorrect torque detected is used to correct the original zero-torque value so that before a subsequent gear disengagement the engine is modulated with a more correct zero-torque value. This method also suffers from the disadvantage that the engine is expected to exhibit a certain behaviour. Such a method can therefore not handle disturbances which only occur occasionally. Such disturbances may for example consist of thrusts from trailers, road surfaces etc. or the automation may attempt to change gear while the driveline is oscillating, e.g. because the driver applies a large change of accelerator pedal position. Nor does this known method provide any means of predicting the quality of the gear change before it is required. Gear changing to neutral position may therefore still take place with the wrong torque situation in the gearbox.

### Objects of the invention

One object of the invention is to make it possible more reliably than previously to ensure that the torque transmitted in the gearbox will be nil, irrespective of whether disturbances occur or not. It has to be possible for any disturbances which occur to be handled in such a manner as to minimise their effect. A further object is to make torque adjustment quicker so that gear changing can be carried out more quickly without any loss of safety.

### Description of the invention

The objects indicated above are achieved by the invention having the features indicated in the characterising part of patent claim 1. The solution adopted according to the invention results in the engine torque adjustment being adapted each time to the conditions prevailing in the particular gear change situation. This results generally in quicker and safer gear changing.

The method according to the invention may be refined by having the engine's fuel controller operate so that the engine oscillates in counterphase and damps out any oscillations in the driveline more quickly.

Other features distinguishing the invention are indicated by the following description of an embodiment with reference to the attached drawings.

### List of drawings

- Fig. 1: shows a schematic structure of a gear change system for mechanical stepped gearboxes,
- Fig. 2: shows schematically an arrangement according to the invention for engine torque adjustment in association with gear changing,
- Fig. 3: shows a theoretical model of a vehicle driveline,
- Fig. 4: shows torsion calculation based on the model in Fig. 3,
- Fig. 5: shows torsion and engine torque as a function of time, during a gear change process,
- Fig. 6: corresponds to Fig. 5 but with the gear change commencing later, and
- Fig. 7: shows the influence of controller structure on the chronological pattern of torsion and net torque from the engine.

### Description of an embodiment

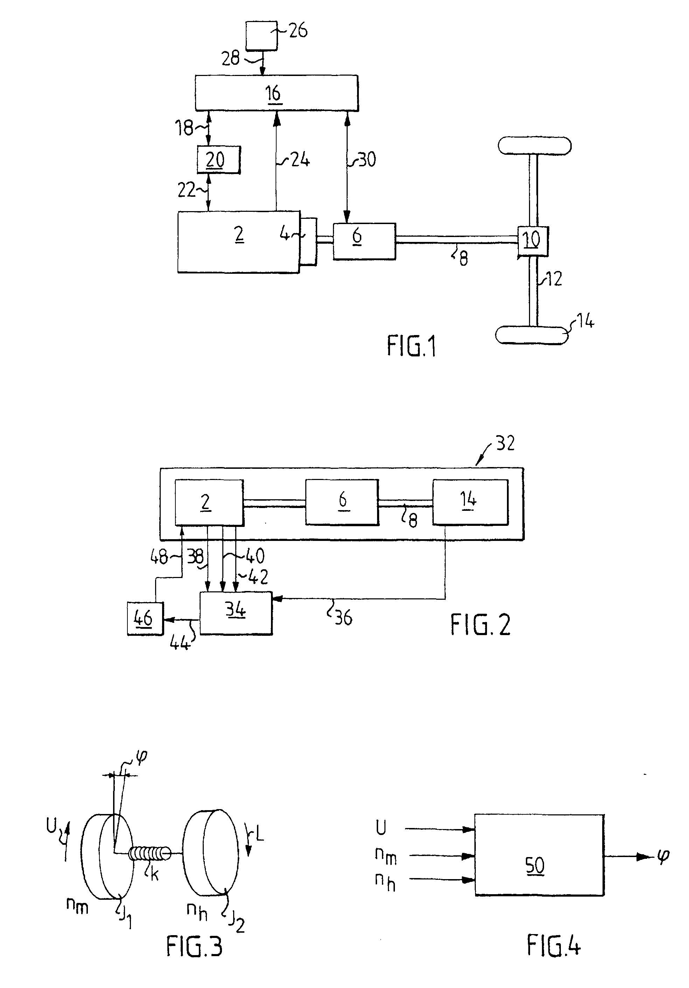

Fig. 1 shows a gear change system for monitoring and controlling computer-assisted gear changing in a mechanical gearbox in a motor vehicle. The structure and operation of the system correspond largely to those of the system described in the aforesaid SE,C,9401653-2 and SE,C,9600454-4, so the only components depicted are those required for understanding the present invention.

The vehicle is powered by a combustion engine 2, preferably a diesel engine, which is connected to the vehicle's driving wheels 14 via a clutch 4, a mechanical stepped gearbox 6, a propeller shaft 8, a final gear 10 and a driveshaft 12. In this embodiment the clutch 4 is only intended to be operated manually at low vehicle speeds and when starting and stopping. While the vehicle is travelling at normal speeds, the clutch 4 is intended to be operated neither manually nor automatically, so gear changes then take place with the clutch 4 engaged and acting as a drive power transmission connection between the engine 2 and the gearbox 6.

The gear change system effects gear changes partly by adjusting the engine speed and the engine torque at the time of gear changes and partly by operating the servos in the gearbox so as to disengage the operative gear and engage the next gear.

The clutch 4 remaining engaged during gear changing results in severe engine control requirements if gear changing is to take place with the shortest possible torque interruption in the mechanical stepped gearbox and with torque-free disengagement of a gear and good speed synchronisation during the engagement of the next gear.

The gear change system incorporates a control unit 16 provided with a microcomputer and connected by various lines to various components of the system. These connections are used for transmitting various signals as illustrated by arrows in Fig. 1. The control unit 16 also has two-way connections whereby it sends output signals to and receives input signals from a multiplicity of control units via a number of links represented in Fig. 1 by bidirectional arrows. Via a link 18 with the engine's fuel injection system 20, which is in its turn connected to various sensors (not further described here), the control unit 16 receives information on the engine speed nₘ. The control unit 16 also receives via the link 18 corresponding information on the engine torque M, which is in practice determined on the basis of the fuel quantity injected. Via a link 22 the fuel injection system 20 controls the fuel quantity supplied to the engine's injectors. During gear changing the control unit 16 provides the fuel injection system 20 with signals which cause the engine to be modulated with the desired torque M.

Via a line 24 the control unit 16 receives from a temperature sensor in the engine a signal representing the engine temperature Tₘ or, in practice, the temperature of the engine coolant. A sensor 26 provides the control unit 16 via a line 28 with information on whether any power take-off is operating and is imposing extra load on the engine.

Via a link 30 the control unit 16 is connected to various solenoid valves in the gearbox 6 which activate the servos to engage and disengage gears. This link 30 is also used for providing the control unit 16 with signals which represent the operating state of the gearbox 6 and indicate which gear is engaged and, during gear changing, with signals which represent the various stages of each gear change.

The control unit 16 is also connected to other vehicle operating controls (not depicted), e.g. gear selector, accelerator pedal, brake pedal, retarder, etc. As these controls operate conventionally and do not distinguish the method according to the invention, further description of them is omitted.

Gear changing is initiated entirely automatically if the driver has selected an automatic position or manually if the driver has selected a manual position. However gear changing is initiated (automatically by the control system or manually by the driver), it is effected by the control unit 16 without the clutch 4 having to be operated.

It is generally the case that for a gear change to take place smoothly it is desirable first to reduce the engine torque to a level corresponding to zero torque in the gearbox, so that neutral position can be reached. To change to the new gear, the engine speed is thereafter adjusted so that it matches the propeller shaft speed. Thereafter the engine torque is increased to a level desired by the driver.

A gear change executed in the wrong torque situation, caused for example by disturbances, driveline oscillations, trailer jerking, etc., results in a gear disengagement which causes variations in propeller shaft speed and wheel speed. This lengthens the time gear changing takes, since it cannot be effected until the oscillations fade away. It also results in the vehicle being jerked, which is disturbing for the driver and causes unnecessary wear on mechanical components, e.g. the gearbox.

At the commencement of gear changing the engine torque is often reduced according to a precalculated torque profile. If it is desired to shorten the time gear changing takes, the torque profile has to be made steeper, which means larger driveline oscillations, thereby making it necessary to wait until they fade out before gear changing can take place. The use of precalculated torque profiles therefore means that gear changing takes longer, since a greater margin is needed to cater for disturbances. Nor is there any means of predicting the quality of the gear change before it is attempted. This results in gear changing to neutral position in the wrong torque situation in the gearbox, thereby causing the aforesaid jerking.

It has according to the invention been found possible to substantially facilitate gear changing by using feedback of a signal representing the torque transmitted in the gearbox as a basis for adjusting the engine torque so that the torque in the gearbox will be nil. This means that so long as the torque transmitted in the gearbox is other than nil, adjustment of the engine torque takes place so that the torque in the gearbox is driven to nil. The result in each particular situation is a unique engine torque profile adapted to the relevant situation.

The principle for a solution according to the invention is indicated in Fig. 2, in which the vehicle's driveline includes the engine 2, the gearbox 6, the propeller shaft 8 and the driving wheel 14 with its associated driveshaft. A sensor 34 receives, via a line 36, information on the wheel speed nₕ and, via lines 38,40 and 42, information on the engine speed nₘ, the engine torque M and the engine temperature Tₘ respectively. On the basis of all this information the sensor 34 generates a signal representing the corresponding torque in the gearbox 6. This signal is carried via a line 44 to a fuel controller 46 which via one or more lines 48 supplies the engine 2 with a fuel quantity corresponding to the value of the signal.

It has in practice been found difficult to incorporate a tcrque sensor in the gearbox, but experiments have shown that the torsion of the driveshafts provides a good measure of how much torque is transmitted in the gearbox. It appears in particular that the most flexible part of the driveline is the driveshafts, which are subject to positive or negative torsion as a function of the engine torque transmitted. If the torsion in the driveshafts is nil, this means that gear changing will take place quickly and safely without any variations in propeller shaft speed.

Against this background, the solution adopted according to the invention is to have the sensor 34 establish a value of the torsion ϕ of the driveshafts as a measure of the corresponding torque in the gearbox 6. The fuel controller 46 thus operates in practice with an input signal which represents the torsion ϕ of the driveshafts.

The value of the torsion ϕ is obtained as follows in the sensor 34:
1. The engine temperature Tₘ and the engine speed nₘ are read in from the engine control unit 16 for subsequent use in a calculation of the engine's frictional moment M _{f}.
2. The corresponding engine torque M is read in from the control unit 16, followed by calculation of the engine's net torque u as u = M - M _{f}.
3. The wheel speed nₕ is read in from, for example, the vehicle's ABS control unit and is thereafter used, together with the engine speed nₘ and the engine's net torque u, in a Kalman filter to calculate the corresponding torsion.

Said Kalman filter is based on a simple model according to Fig. 3 of the vehicle's driveline (see Figs. 1 and 2). Two moments of inertia J₁ and J₂ are linked by a damped spring k which symbolises the driveshaft. The first moment of inertia J₁ comprises the engine, the clutch and the gearbox. The second moment of inertia J₂ comprises the wheels and the mass of the vehicle. The model is driven by the calculated net torque u (calculated in step 2 above) and is braked by a load L which mainly consists of the road gradient. The influence of rolling resistance and air resistance is slight relative to that of the road gradient, particularly at the low values and low velocities which are here of greatest interest. The spring k is thus subject to a torsion ϕ as a function of the engine's net torque u and the load L.

The model translates to three equations which calculate the torsion ϕ of the spring k as a function of the engine's net torque u, the engine speed nₘ and the wheel speed nₕ. This is depicted schematically in Fig. 4, in which a Kalman filter 50 forming part of the sensor 34 calculates the torsion ϕ as a function of u, nₘ and nₕ. As indicated previously, the torsion ϕ constitutes the input signal from the sensor 34 to the fuel controller 46. It has been found possible to use a fuel controller 46 of the PID type to bring about engine-controlled damping of oscillations in the vehicle's driveline. This can be achieved by fuel being injected so that the engine oscillates in counterphase and thereby damps oscillations. Simple adjustment rules can be applied to provide a controller 46 which generates a fuel quantity so that the torsion ϕ is driven to nil without exciting (initiating) any driveline oscillations. This is significant for being able to disengage a gear quickly and at the right torque level.

A fuel controller 46 of the PID type used as one of a number of controllers in the fuel injection system 20 consists of three different components, namely a proportional I component (P component), an integral component (I component) and a derivative component (D component). The mutual priority between these components determines the behaviour of the controller. The P component determines the rate of adjustment. The larger the P component, the quicker the adjustment. The rate is limited by how much frictional torque the engine can generate.

The function of the I component is to ensure that the torsion ϕ will be nil, thereby ensuring that gear changing takes place in such conditions that there will be no disturbance for the driver, while at the same time the speed adjustment phase will be shorter.

With only a P component and an I component the adjustment will result in driveline oscillations being excited across the driveshafts. The I component will still ensure that the torsion will be nil, but this will take a long time, because of having to wait until the oscillations fade away. This can be obviated by incorporating in the controller a D component to ensure that the engine damps the oscillations and that the torsion reaches nil without oscillations being excited.

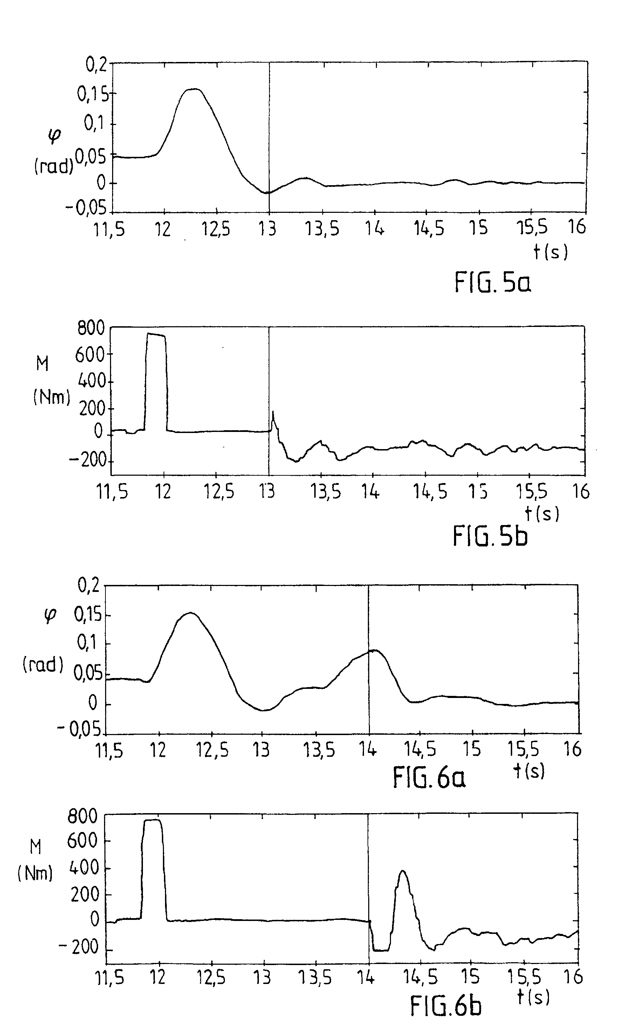

The solution according to the invention has been tested in various driving situations in a Scania 144L truck with a GRS900R gearbox. Examples of how feedback caters for disturbances appear in Figs. 5 and 6, in which gear changing is requested in the midst of a situation in which the driveline is oscillating because of a torque pulse from the engine. Figs. 5a and 6a show the torsion ϕ as a function of time, Figs. 5b and 6b the corresponding engine torque M as a function of time.

In Fig. 5 gear changing is requested at time 13.0 s and in Fig. 6 at 14.0 s (marked by vertical lines). The use according to the invention of feedback in combination with engine-controlled damping generates different engine torque profiles in the two cases, resulting in the torsion ϕ being quickly driven to nil from the oscillating situation prevailing when gear changing was requested.

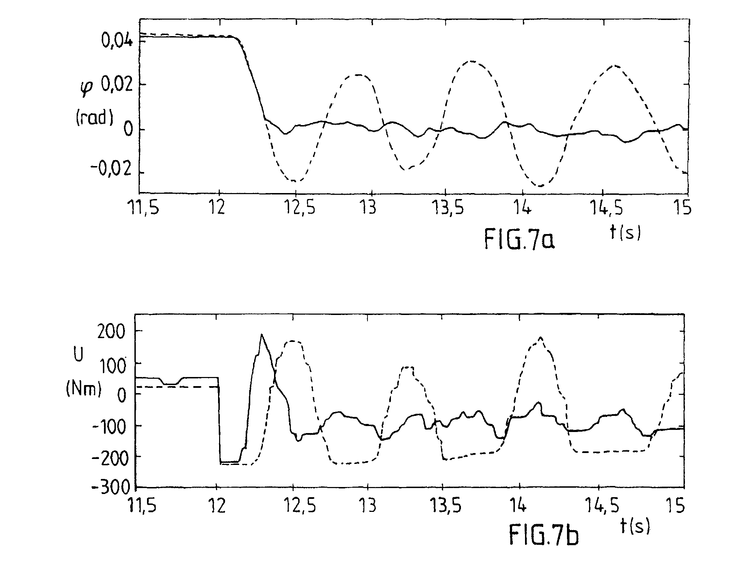

The influence of the D component of the fuel controller 46 may be seen in more detail in Fig. 7, in which Fig. 7a shows the torsion ϕ and Fig. 7b the net torque u from the engine as a function of time.

The controller 46 calculates a fuel quantity which generates a net torque u as per Fig. 7b (unbroken line) and a torsion ϕ as per Fig. 7a (unbroken line). The vehicle (same as before) is driven at a certain speed which requires a net torque u of about 50 Nm (with a frictional torque of about 200 Nm). This generates a torsion ϕ in excess of 0.04 radians. At time 12 s the fuel controller 46 is activated (it is used for gear changing and may therefore be called the gear change controller) and calculates the fuel quantity so that the torsion ϕ is driven to nil. First, the P component is adjusted so that the desired rate is achieved. A small I component is then sufficient for achieving zero torsion ϕ. The combination of a P component and an I component is represented by the broken line in Figs. 7a and 7b. As may be seen, driveline oscillations are generated across the driveshafts and have to be allowed to fade out before gear changing can be requested. In the case of the unbroken line the same I component and P component arise but a D component also forms part of the controller. This D component is adjusted so that the oscillation is damped by the engine being controlled in counterphase. This means that gear changing can be carried out after about 0.25 s, which is quick for the low gear to which the test refers.

As may be seen, the invention results in quicker, better and safer gear changes.

One reason for this is that the engine torque reduction can take place more quickly, since the engine is controlled so that oscillations are damped during this phase. Another reason is that the disturbance is handled by the engine torque being adjusted so as to minimise the influence of disturbances. A further reason is that a measure of gear change quality is available before gear changing is requested. Still another reason is that the duration of the speed adaptation phase is reduced by there being no propeller shaft speed variations after gear disengagement.

Using feedback makes it unnecessary to allow for various auxiliary units being in operation and loading the engine. This is catered for automatically. Wear and other time-dependent characteristics are also easy to handle by feedback.

Control based on the torsion of the driveshafts is found to be easy, with the possibility of using a simple and reliable controller of the PID type.

The engine torque is established as a function of the amount of fuel injected by testing with various quantities of fuel, and the engine's frictional torque is established in like manner. It has in this respect been found sufficient to adopt the simple assumption that the friction depends on temperature and engine speed. Only marginal improvement is achieved by making the evaluation more complex.

The basic concept of the invention includes the principle of detecting torsion of a relatively weak component of the driveline in order to represent the torque transmitted. In alternative embodiments of the invention the detection may be applied to other relatively weak components of the driveline, e.g. the vehicle's clutch.

## Claims

1. Method of an automatic gear changing in a mechanical stepped gearbox without clutch release in a motor vehicle, wherein engine torque (M) and hence torque transmitted in the gearbox is reduced in association with disengagement of a gear to neutral position, **characterised in that** a signal (ϕ) representing the torque transmitted in the gearbox is generated, that this signal (ϕ) is driven to nil by the fact that the engine torque (M) applied is reduced so long as the signal is other than nil, and that gear changing is executed when the signal has been driven to nil.

2. Method according to claim 1, **characterised in that** the signal (ϕ) representing the torque transmitted in the gearbox is applied to a fuel controller (46) for the engine.

3. Method according to claim 1 or 2, **characterised in that** the signal (ϕ) representing the torque transmitted in the gearbox takes the form of a signal referring to the corresponding torsion of driveshafts (12) connected to the vehicle's driving wheels (14).

4. Method according to claim 3, **characterised in that** the value of the torsion is calculated by processing of measurement signals which represent the corresponding engine speed (nₘ) and driving wheel speed (nₕ).

5. Method according to any of claims 1-4, **characterised in that** the engine torque (M) is controlled so that it changes to counterphase relative to oscillations in the vehicle's driveline and thereby damps these oscillations.

6. Method according to claim 5, **characterised in that** a fuel controller of the PID type which operates during a gear changing phase is used for engine-controlled damping of oscillations in the vehicle's driveline.

7. Method according to claim 4, **characterised in that** a Kalman filter is used for calculating the torsion (ϕ) and is based on a model of the vehicle's driveline.

8. Method according to claim 7, **characterised in that** the model used incorporates two moments of inertia (J₁, J₂) which are linked by a damped spring (k) symbolising the driveshaft (12) whose torsion (ϕ) is to be determined, the first moment of inertia (J₁) comprises the engine, the clutch and the gearbox, the second moment of inertia (J₂) comprises the wheels and the mass of the vehicle, and the model is driven by the engine's net torque (u) and is braked by a load (L) represented mainly by the gradient of the roadway.

9. Method according to claim 8, **characterised in that** the input variables used are the engine's net torque (u) and speed (nₘ) and the wheel speed (nₕ).

10. Method according to claim 2, **characterised in that** the fuel controller (46) generates a fuel quantity so that the torsion (ϕ) is driven to nil without driveline oscillations being excited.

## Patentansprüche

1. Verfahren eines automatischen Gangwechsels in einem mechanischen Stufengetriebe ohne Auskuppeln in einem Kraftfahrzeug, wobei Motordrehmoment (M) und somit im Getriebe übertragenes Drehmoment in Verbindung mit dem Ausrücken eines Ganges in eine neutrale Stellung vermindert werden, **dadurch gekennzeichnet, dass** ein das im Getriebe übertragene Drehmoment darstellendes Signal (ϕ) erzeugt wird, dass dieses Signal (ϕ) auf Null gebracht wird, dadurch dass das aufgebrachte Motordrehmoment (M) so lange vermindert wird, wie das Signal von Null abweicht, und dass der Gangwechsel ausgeführt wird, wenn das Signal auf Null gebracht worden ist.

2. Verfahren nach Anspruch 1, **dadurch gekennzeichnet, dass** das Signal (ϕ), welches das im Getriebe übertragene Drehmoment darstellt, einer Brennstoffsteuerung (46) für den Motor zugeführt wird.

3. Verfahren nach Anspruch 1 oder 2, **dadurch gekennzeichnet, dass** das Signal (ϕ), welches das im Getriebe übertragene Drehmoment darstellt, die Form eines Signals aufweist, das sich auf die entsprechende Torsion von mit den angetriebenen Rädern des Fahrzeugs verbundenen Antriebswellen (12) bezieht.

4. Verfahren nach Anspruch 3, **dadurch gekennzeichnet, dass** der Wert der Torsion durch Verarbeitung von Messsignalen errechnet wird, welche die entsprechende Motordrehzahl (nₘ) und Antriebsraddrehzahl (n_{b}) darstellt.

5. Verfahren nach einem der Ansprüche 1-4, **dadurch gekennzeichnet, dass** das Motordrehmoment (M) so gesteuert wird, dass es sich gegenphasig zu Schwingungen im Antriebsstrang des Fahrzeugs verändert und dadurch diese Schwingungen dämpft.

6. Verfahren nach Anspruch 5, **dadurch gekennzeichnet, dass** eine während einer Gangwechselphase arbeitende Brennstoffsteuerung des PID-Typs zur motorgesteuerten Dämpfung von Schwingungen im Antriebsstrang des Fahrzeugs verwendet wird.

7. Verfahren nach Anspruch 4, **dadurch gekennzeichnet, dass** ein Kalman-Filter zum Berechnen der Torsion (ϕ) verwendet wird und auf einem Modell des Antriebsstrangs des Fahrzeugs basiert.

8. Verfahren nach Anspruch 7, **dadurch gekennzeichnet, dass** das verwendete Modell zwei Trägheitsmomente (J₁, J₂) einschließt, die durch eine die Antriebswelle, deren Torsion (ϕ) bestimmt werden soll, darstellende gedämpfte Feder (k) verbunden sind, wobei das erste Trägheitsmoment (J₁) den Motor, die Kupplung und das Getriebe umfasst, das zweite Trägheitsmoment (J₂) die Räder und die Masse des Fahrzeugs umfasst, und das Modell vom Nettodrehmoment (u) des Motors angetrieben und von einer Last (L) abgebremst wird, die hauptsächlich vom Gradienten der Fahrbahn dargestellt wird.

9. Verfahren nach Anspruch 8, **dadurch gekennzeichnet, dass** die verwendeten Eingangsvariablen das Nettodrehmoment (u) und die Drehzahl (nₘ) des Motors und die Raddrehzahl (nₕ) sind.

10. Verfahren nach Anspruch 2, **dadurch gekennzeichnet, dass** die Brennstoffsteuerung (46) eine Brennstoffmenge generiert, bei der die Torsion (ϕ) auf Null gebracht wird, ohne dass Schwingungen im Antriebsstrang angeregt werden.

## Revendications

1. Procédé de changement automatique d'engrenage dans une boîte de vitesse mécanique étagée sans débrayage dans un véhicule à moteur, le couple moteur (M), et donc le couple transmis à la boîte de vitesse, étant réduit en association avec la libération d'un engrenage vers une position neutre, **caractérisé en ce qu'**un signal (ϕ) représentant le couple transmis dans la boîte d'engrenage est généré, **en ce que** ce signal (ϕ) est entraîné vers nul par le fait que le couple moteur (M) appliqué est réduit aussi longtemps que le signal est autre que nul, et **en ce qu'**un changement de vitesse est exécuté lorsque le signal a été entraîné vers nul.

2. Procédé selon la revendication 1, **caractérisé en ce que** le signal (ϕ) représentant le couple transmis dans la boîte d'engrenage est appliqué à un régulateur de carburant (46) du moteur.

3. Procédé selon la revendication 1 ou 2, **caractérisé en ce que** le signal (ϕ) représentant le couple transmis dans la boîte d'engrenage prend la forme d'un signal se rapportant à la torsion correspondante d'arbres d'entraînement (12) connectés aux roues motrices de véhicule (14).

4. Procédé selon la revendication 3, **caractérisé en ce que** la valeur de la torsion est calculée en traitant des signaux de mesure qui représentent la vitesse moteur (nₘ) et la vitesse de roue motrice (nₕ) correspondantes.

5. Procédé selon l'une quelconque des revendications 1 à 4, **caractérisé en ce que** le couple moteur (M) est commandé de sorte qu'il passe en phase contraire par rapport aux oscillations dans la ligne de transmission du véhicule, et amortit de la sorte ces oscillations.

6. Procédé selon la revendication 5, **caractérisé en ce qu'**une commande de carburant du type PID (Proportionnel, Intégral, par Différenciation) qui fonctionne pendant une phase de changement d'engrenage, est utilisé pour un amortissement commandé par moteur d'oscillations dans la ligne de transmission du véhicule.

7. Procédé selon la revendication 4, **caractérisé en ce qu'**un filtre de Kalman est utilisé pour calculer la torsion (ϕ), et est basé sur un modèle de la ligne de transmission du véhicule.

8. Procédé selon la revendication 7, **caractérisé en ce que** le modèle utilisé comporte deux moments d'inertie (J₁, J₂) qui sont reliés par un ressort amorti (k) symbolisant l'arbre d'entraînement (12) dont la torsion (ϕ) doit être déterminée, le premier moment d'inertie (J₁) comportant le modèle, l'embrayage et la boîte de vitesse, le second moment d'inertie (J₂) comportant les roues et la masse du véhicule, et le modèle est entraîné par le couple net de moteur (u), et est freiné par une charge (L) représentée principalement par le gradient de la chaussée.

9. Procédé selon la revendication 8, **caractérisé en ce que** les variables d'entrée utilisées sont le couple net de moteur (u), la vitesse (nₘ) et la vitesse de roue (nₕ).

10. Procédé selon la revendication 2, **caractérisé en ce que** le régulateur de carburant (46) génère une quantité de carburant, de sorte que la torsion (ϕ) est entraîné vers nul, sans oscillations de ligne de transmissions
